# EUROPÄISCHE PATENTSCHRIFT

(11) **EP 2 479 428 B1**
(45) Veröffentlichungstag und Bekanntmachung des Hinweises auf die Patenterteilung: **18.12.2013**
(21) Anmeldenummer: 11151849.4
(22) Anmeldetag: 24.01.2011
(51) Int. Cl.: F03D 7/02, F03D 11/00, F16D 65/00, F16D 65/14, F16D 65/18, F16D 121/24, F16D 125/40, F16D 127/10

(54) **Windturbine mit einer Bremsvorrichtung und Verfahren zum Abbremsen sowie Verwendung der Bremsvorrichtung**
Wind turbine with a brake device and method for braking as well as use of the brake device
Eolienne avec un dispositif de freinage et procédé de freinage ainsi que l'utilisation du dispositif de freinage

(43) Veröffentlichungstag der Anmeldung: 25.07.2012
(73) Patentinhaber: Siemens Aktiengesellschaft, 80333 München (DE)
(72) Erfinder: Wohlleb, Matthias, 52064, Aachen (DE)

(56) Entgegenhaltungen:
- DE-A1-102007 039 614
- DE-A1-102007 058 746
- DE-U1- 20 203 794
- GOMBERT BERND ET AL: "Die Elektronische Keilbremse Meilenstein auf dem Weg zum Elektrischen Radantrieb", ATZ AUTOMOBILTECHNISCHE ZEITSCHRIFT, VIEWEG PUBLISHING, WIESBADEN, DE, Bd. 108, Nr. 11, 1. November 2006 (2006-11-01), Seiten 904-913, XP008137458, ISSN: 0001-2785

## Beschreibung

Die vorliegende Erfindung betrifft eine Windturbine mit einem Rotor und mit mindestens einem Triebstrang, der mit einem Generator zur Gewinnung von elektrischer Energie aus einer Rotation des Triebstrangs verbunden ist, sowie mit einer Bremsvorrichtung zum Abbremsen zumindest einer Triebstrangkomponente des Triebstrangs. Sie betrifft außerdem ein Verfahren zum Abbremsen zumindest einer Triebstrangkomponente eines Triebstrangs einer Windturbine mit einem Rotor und mit mindestens dem Triebstrang, der mit einem Generator zur Gewinnung von elektrischer Energie aus einer Rotation des Triebstrangs verbunden ist. Weiterhin betrifft sie die Verwendung einer Bremsvorrichtung zum Abbremsen zumindest einer Triebstrangkomponente eines Triebstrangs einer Windturbine mit einem Rotor und mit mindestens dem Triebstrang, der mit einem Generator zur Gewinnung von elektrischer Energie aus einer Rotation des Triebstrangs verbunden ist.

In einer Windturbine wird die kinetische Energie des Windes dazu benutzt, einen Rotor in eine Rotationsbewegung zu bringen. Diese Rotationsbewegung wird über einen Triebstrang in einen Generator übertragen, der aus der Rotationsenergie elektrische Energie generiert. Unter regulären Betriebsverhältnissen und bei vollkommener Funktionsfähigkeit aller Funktionskomponenten der Windturbine erfolgt dieser Ablauf in der Regel ohne steuernde Einwirkung von außen. Jedoch ist es in verschiedenen Gefahrensituationen bzw. kritischen Betriebssituationen der Windturbine notwendig, eine Bremsung des Triebstrangs vorzunehmen. Dies ist insbesondere dann notwendig, wenn einzelne Komponenten der Windturbine außer Betrieb sind und durch die Rotationsbewegung des Triebstrangs weitere Schäden verursacht werden können. Gleiches gilt für Wartungssituationen, in denen die Windturbine durch Fachpersonal gewartet wird. Das Fachpersonal befindet sich hierfür üblicherweise in der Kanzel der Windturbine und ist durch die Rotationsbewegung des Triebstrangs sowohl an der Ausführung seiner Tätigkeiten behindert als auch durch die enormen Kräfte, die durch diese Rotation verursacht werden, stark gefährdet. Dies bedeutet, dass der Triebstrang bei einer Wartung in der Regel komplett abgebremst und arretiert werden muss, um Gefährdungen und Behinderungen für das Personal auszuschließen.

Auch bei extremen Windverhältnissen, insbesondere Stürmen oder Orkanen, ist eine vollständige oder teilweise Bremsung der Rotationsbewegung des Triebstrangs notwendig. Nur so kann sichergestellt werden, dass bei hohen Windgeschwindigkeiten keine Schäden an Funktionsteilen der Windturbine, etwa am Rotor oder im Generator, entstehen.

Entsprechend sind heutige industriell eingesetzte Windturbinen mit großen Leistungen, d. h. größer als 100 kW, in der Regel immer mit Bremsvorrichtungen ausgestattet, die eine teilweise und auch vollständige Bremsung der Rotationsbewegung des Triebstrang erlauben. Solche Bremsvorrichtungen bestehen üblicherweise aus mindestens einem Bremssattel mit (jeweils) mindestens einem Bremsbelag, wobei der Bremssattel eine Bremsscheibe so umfasst, dass der Bremsbelag gegen die Bremsscheibe gedrückt werden kann und somit die Bremsscheibe in ihrer Bewegung bremst. Die Bremsscheibe ist hierzu an einer Triebstrangkomponente des Triebstrangs der Windturbine fest angebracht. Sie rotiert daher mit derselben Rotationsgeschwindigkeit wie die Triebstrangkomponente; durch das Abbremsen ihrer Rotationsbewegung wird somit umgekehrt auch die Triebstrangkomponente mit abgebremst.

Die deutsche Patentanmeldung DE 10 2007 058 746 A1 beschreibt eine Windturbine der eingangs genannten Art, bei der die

Bremsvorrichtung eine elektromagnetisch betätigbare Reibungsbremsvorrichtung umfasst.

Üblicherweise jedoch werden Bremsvorrichtungen über hydraulische oder pneumatische Übertragungssysteme gesteuert. Dies bedeutet, dass die Transmission und die Kontrolle der Bremskräfte mittels eines hydraulischen oder pneumatischen Fluidums in einem geschlossenen Kreislauf erfolgen. Den notwendigen hydraulischen Druck erzeugt meist eine hydraulische Pumpe oder ein Kompressor. Durch das Öffnen von Magnetventilen werden die hydraulischen bzw. pneumatischen Kräfte eingekoppelt.

Die Anforderungen an Bremsvorrichtungen in Windturbinen bestehen insbesondere darin, dass die Bremskräfte verlässlich übertragen werden sollen und zudem eine möglichst konstante Bremskraft ausgeübt werden soll. Die Kräfte beim Betrieb einer Windturbine erreichen enorme Größen, die beispielsweise um ein Vielfaches größer sind als im Antriebsstrang eines Automobils. Zusätzlich unterliegen Bremsvorrichtungen in Windturbinen über ihre gesamte Lebensdauer neben den Rotationskräften auch anderweitigen starken mechanischen Beanspruchungen wie Vibrationen, Resonanzeffekten und Dämpfungseffekten. Speziell in Gefahrensituationen sind alle am Triebstrang und damit am Generator angreifenden Kräfte nochmals deutlich erhöht, so dass es insbesondere notwendig ist, dass die Bremsen konstante Bremskräfte über längere Zeit ausüben können und auch bei hohen Temperaturen sicher funktionieren. Die Verlässlichkeit der Transmission (mittels des pneumatischen bzw. hydraulischen Fluidums) wird heute meist dadurch gewährleistet, dass zusätzliche Kühl- und Filterausrüstung verwendet wird. Die Filterung dient dabei dazu sicherzustellen, dass das Fluidum zu jeder Zeit so einsetzbar ist, dass die volle Bremskraft übertragen werden kann. Die Kühlung dient der Prävention von Überhitzungen des Fluidums und damit von Überbeanspruchungen der hydraulischen beziehungsweise pneumatischen Leitungen.

Dies bedeutet, dass sowohl das pneumatische bzw. hydraulische System von Bremsvorrichtungen in Windturbinen als auch die Kühl- bzw. Filtervorrichtungen hohen technischen und materialmäßigen Aufwand mit sich bringen. Es ist daher ein hoher Aufwand an Material, Bauraum innerhalb der Kabine der Windturbine, Gewicht und Kosten die Folge. Trotz dieses Aufwandes ist eine adäquate und präzise Kontrolle der derzeit eingesetzten (oben beschriebenen) Bremsvorrichtungen aufgrund der Trägheit der hydraulischen bzw. pneumatischen Transmissionsmittel und aufgrund nur schwierig zu kontrollierenden Qualitätsunterschiede der Magnetventile nur sehr schwer zu garantieren.

Aufgabe der vorliegenden Erfindung ist es vor diesem Hintergrund, eine Möglichkeit bereitzustellen, wie die Bremsung eines Triebstrang beziehungsweise einzelner seiner Komponenten innerhalb einer Windturbine der eingangs genannten Art verbessert werden kann, vorzugsweise insbesondere so, dass sie verlässlicher bzw. wartungsärmer betrieben werden kann und Kosten bzw. Material und Arbeitsaufwand gespart werden können.

Diese Aufgabe wird durch eine Windturbine gemäß Anspruch 1 und ein Verfahren gemäß Anspruch 14 sowie durch die Verwendung einer Bremsvorrichtung gemäß Anspruch 15 gelöst.

Entsprechend umfasst in einer Windturbine der eingangs genannten Art die Bremsvorrichtung eine Keilbremse.

Der Triebstrang kann dabei aus einer oder aus mehreren Triebstrangkomponenten gebildet sein, beispielsweise aus einer ersten Welle und einer über eine Getriebevorrichtung mit der ersten Welle gekoppelte zweite Welle.

Die Verwendung einer Keilbremse im Rahmen der Bremsvorrichtung weist mehrere entscheidende Vorteile gegenüber dem Stand der Technik mit herkömmlichen Bremsvorrichtungen der oben beschriebenen Art auf. Insbesondere ist zu erwähnen, dass zum Bremsen in der Regel ein geringerer Kraftaufwand notwendig ist beziehungsweise mit derselben Kraft eine größere Bremswirkung der Bremsvorrichtung erzielbar ist. Außerdem kann eine Keilbremse sehr präzise gesteuert werden und bedarf keines hydraulischen beziehungsweise pneumatischen Zuleitungssystems, so dass die oben beschriebenen zahlreichen technischen Probleme solcher Systeme vermieden werden können. Insbesondere fallen selbstredend die Filterung der Transmissionsfluide sowie ihre Kühlung vollständig weg. Stattdessen ist bei der Keilbremse lediglich ein Aktuator notwendig, der den Bremskeil so verschiebt, dass sich eine gewünschte Bremswirkung ergibt, bzw. so, dass die momentane Bremswirkung reduziert wird.

Keilbremsen werden heute probeweise in Automobilen als neuartige Bremssysteme eingesetzt. Beispielsweise kann in diesem Zusammenhang auf den Artikel Gombert, Bernd / Philip Gutenberg: "Die elektronische Keilbremse", Automobiltechnische Zeitschrift 11/08, 108. Jahr, November 2006, S. 904-912 verwiesen werden. Dieser Artikel gibt auch einen Vergleich zwischen konventionellen hydraulischen Bremssystemen und einer elektronischen Keilbremse wieder - jeweils für Bremssysteme im automobilen Anwendungsfeld. Der Artikel resümiert, dass die elektronische Keilbremse geringere Kraftaufwände und damit weniger Energie benötigt, um dieselbe Bremskraft zu erreichen wie andere automobile Bremssysteme. Eine andere Ausführungsform einer elektronischen Keilbremse ist in der deutschen Patentanmeldung DE 10 2007 039614 A1 beschrieben.

Die Verwendung von Keilbremsen im Rahmen von Windturbinen ist über diesen Vorteil hinaus auch deshalb besonders effektiv, weil die Größen der auftretenden Kräfte sowie die potenziell durch Reibungskräfte entstehende Wärmeentwicklung bedeutend größer sind als bei der Anwendung in einem Personenkraftwagen. Zudem muss die Bremsung im Gegensatz zu Kraftfahrzeugen in einer Windturbine vollautomatisch und ohne menschliche Nachregelung erfolgen, während der Aktuator beim Betrieb der Bremse im Automobil im Endeffekt der Mensch, nämlich der Fahrer ist. Dies bedeutet, dass noch bedeutend größere Anforderungen an die absolute Verlässlichkeit der Einhaltung von Bremskräften bei der Abbremsung des Triebstranges einer Windturbine gestellt werden als dies im Automobilbereich der Fall ist. Versuche des Erfinders haben jedoch ergeben, dass der Betrieb von Keilbremsen im Windturbinenbereich so verlässlich ist, dass sie erst recht dort verwendet werden kann, wobei sich in dieser großtechnischen Anwendung die Vorteile sogar noch potenzieren: Erstens sind die oben beschriebenen Probleme bei Bremsvorrichtungen gemäß dem Stand der Technik deutlich prägnanter als bei technischen Anwendungen in der Größenordnung von Verbrennungskraftmaschinen mit ca. 100 kW, da Windturbinen moderner Bauart durchaus Nennleistungen über 1 MW haben. Zweitens ist aufgrund der Größe der Anlagen auch ein deutlich größerer Bauraum für die Bremsvorrichtung vorhanden, so dass im Endeffekt Keilbremsen einfacherer Konstruktionsart verwendet werden können und dennoch sogar noch zu einem Platzeinsparungseffekt beitragen. So sind beispielsweise die Bremsscheiben in Windturbinen entsprechend erheblich größer und bieten daher mehr Angriffsfläche für den Bremskeil der Keilbremse als dies im Automobil-Motorraum der Fall ist. Drittens spielt hier die Kraftübertragung vom Aktuator zur eigentlichen Bremse eine bedeutend wichtigere Rolle als im Automobilbereich. Zuletzt bietet die Keilbremse sogar, wie unten noch näher erläutert wird, durch ihre erheblich feinere Steuerbarkeit die Möglichkeit, als Zusatzeffekt dämpfend gegen Vibrationen zu wirken. Es handelt sich also bei der Erfindung nicht um eine einfache Übertragung eines Prinzips von einem technischen Anwendungsbereich in einen anderen, sondern um die gelungene Modifikation eines im Middle-Tech-Bereich angewandten Systems für den großtechnischen Einsatz, bei dem an sich zu erwarten gewesen wäre, dass zahlreiche zusätzliche Hindernisse (eben beispielsweise die Größenordnung, die Größe der Kräfte und die Vibrationseffekte) zu überwinden gewesen wären.

Erfindungsgemäß ist das Verfahren der eingangs genannten Art dadurch weitergebildet, dass das Abbremsen mittels einer eine Keilbremse umfassenden Bremsvorrichtung durchgeführt wird. Mithilfe der Keilbremse ist es wie oben erwähnt möglich während des Bremsens eine deutlich bessere Kontrolle über den Bremsprozess zu erzielen und gleichzeitig einfacher und mit weniger Kraft- und Energieaufwand eine hohe und konstante Bremswirkung zu erreichen. Hierzu ist ein bedeutend geringerer Betriebsaufwand notwendig als bei konventionellen Bremsvorrichtungen, wie sie oben beschrieben worden.

Entsprechend umfasst die Erfindung auch die Verwendung einer eine Keilbremse umfassenden Bremsvorrichtung zum Abbremsen zumindest einer Triebstrangkomponente eines Triebstrangs einer Windturbine mit einem Rotor und mit mindestens dem Triebstrang, der mit einem Generator zur Gewinnung von elektrischer Energie aus einer Rotation des Triebstrangs verbunden ist.

Weitere besonders vorteilhafte Ausgestaltungen und Weiterbildungen der Erfindung ergeben sich auch aus den abhängigen Ansprüchen sowie der nachfolgenden Beschreibung. Dabei kann das erfindungsgemäße Verfahren bzw. die erfindungsgemäße Verwendung auch entsprechend den abhängigen Ansprüchen zur Windturbine weitergebildet sein und umgekehrt.

Grundsätzlich ist es bei Keilbremsen möglich, die Steuerung der Bremswirkung durch mechanische Übertragungssysteme, etwa durch Schubstangen- und/oder Zahnrad-Getriebe und/oder Seilzüge oder im Einzelfall auch hydraulisch oder pneumatisch, oder auch durch menschliche Einwirkung einzustellen. Um die Präzision der Bremswirkung zu erhöhen und einen sicheren und kontrollierten Ablauf noch besser gewährleisten zu können, wird bevorzugt eine elektronische Keilbremse mit einer elektronischen Bremskraftregelung verwendet. Dabei werden elektronische Steuerbefehle generiert, die über Übertragungsleitungen direkt an einen Aktuator übertragen werden und von diesem durch entsprechende Einstellung der Position der Keilbremse umgesetzt werden können. Eine indirekte Übertragung mittels hydraulischer Transmissionsfluide mit der entsprechenden oben beschriebenen Fehler- und Wartungsanfälligkeit ist daher nicht vonnöten. Die elektronische Kontrolle und Ansteuerung ermöglicht es vielmehr auch, sehr fein abgestimmte Bremswirkungen zu erzielen, und dies praktisch in Echtzeit. Zudem ist es möglich, mit einem rein elektronischen Regelungssystem ein Closed-Loop-System zu realisieren, bei dem eine Kontrolleinheit zur elektronischen Bremskraftregelung mit einer Auswertungseinheit verbunden ist (bzw. eine solche umfasst), die Brems-Messsignale aus einer Messung der Bremswirkung verarbeitet, so dass die Kontrolleinheit aus den Ergebnissen dieser Signalverarbeitung verfeinerte Steuerbefehle zur Bremskraftregelung ableiten kann. Mit anderen Worten ist hier erstmals ein selbstregelndes System zur Verfügung gestellt, bei dem auch trotz des Verschleißes, der unweigerlich bei Bremsvorrichtungen auftritt, jederzeit eine genaue Bremskrafteinstellung möglich ist, auch im laufenden Betrieb der Bremsvorrichtung.

Im Rahmen dessen ist es besonders bevorzugt, eine Kontrolleinheit zur Bremskraftregelung zu verwenden, die im Betrieb Vibrationen mindestens einer Triebstrangskomponente aktiv entgegenwirkt. Die Kontrolleinheit fährt damit eine Art "Bremsprogramm", das aus Vibrationsmessungen der jeweiligen Triebstrangkomponente Steuerbefehle ableitet, die dazu geeignet sind, die Triebstrangkomponente gegenläufig zur Vibrationsfrequenz abzubremsen. Auf diese Weise werden die Vibrationen der Triebstrangkomponente aufgefangen und ihnen effektiv dämpfend entgegengewirkt. Es lässt sich auf diese Art und Weise erstmals eine effektive aktive Gegenmaßnahme gegen starke Vibrationen der Triebstrangkomponenten realisieren. Dies bedeutet, dass in der Kanzel der Windturbine eine deutlich geringere Gefahr von Beschädigungen durch derartige Vibrationen entsteht und verschiedene Funktionskomponenten der Windturbine effektiv vor frühzeitiger Alterung geschützt werden können. Diese gesteuerte Gegenmaßnahme bewirkt damit letztlich, dass sich die Lebensdauer der Windturbine insgesamt deutlich erhöhen lässt. Eine solche Vibrationsdämpfung mithilfe der Bremsvorrichtung ist bei Windturbinen mit herkömmlichen Bremsvorrichtungen gemäß Stand der Technik selbstredend nicht möglich, da solche Bremsvorrichtungen nicht in der Präzision und Zeitgenauigkeit (aufgrund ihrer Trägheit) agieren können.

Gemäß einer bevorzugten Ausführungsform umfasst der Triebstrang eine erste Welle und eine zweite Welle als Triebstrangkomponenten auf, die über ein Übersetzungsgetriebe miteinander verbunden sind. Das Übersetzungsgetriebe übersetzt dabei die niedrige Drehgeschwindigkeit in der ersten Welle in höhere Drehgeschwindigkeiten der zweiten Welle, so dass einerseits leichtere Generatoren angetrieben werden können und andererseits die Bremsung des Triebstrangs feiner abgestimmt werden kann: Die Bremsung einer schneller rotierenden Welle (im Vergleich zu Rotationsgeschwindigkeit des Rotors und einer mit ihm direkt verbundenen ersten Welle) kann deshalb präziser erfolgen, weil die Bremswirkung in absoluten Werten der Geschwindigkeitsreduzierung einfacher messbar ist als bei langsamen rotierenden Wellen. Zudem ist damit die zweite Welle weniger träge als die langsam laufende erste Welle.

Es ist daher besonders bevorzugt bei einer derartigen Windturbine mit einer ersten Welle und einer zweiten Welle, dass die Keilbremse im Bereich der zweiten Welle angeordnet ist.

Vorzugsweise umfasst die erfindungsgemäße Windturbine außerdem eine Kontrolleinheit zur elektronischen Bremskraftregelung, welche Kontrolleinheit Signale aus mindestens einem Sensor bezieht, der im Betrieb Parameterwerte der Rotation einer Triebstrangkomponente und/oder Parameterwerte misst, die sich auf Temperaturen im Bereich des Inneren der Windturbine und/oder auf Wetterverhältnisse um die Windturbine herum beziehen.

Parameterwerte der Rotation von Triebstrangkomponenten umfassen insbesondere Messwerte zur Drehgeschwindigkeit, zum Drehmoment beziehungsweise zu Vibrationen der jeweiligen Triebstrangkomponente. Die Messung von Vibrationen dient beispielsweise der Entgegenwirkung gegen diese Vibrationen (siehe oben), während sich Informationen über Drehgeschwindigkeit beziehungsweise Drehmoment besonders dazu verwenden lassen, automatisch eine Bremsung einzuleiten, wenn bestimmte Schwellenwerte überschritten werden und daraus im Endeffekt eine Gefahrensituation abgeleitet werden kann. Ähnlich stellt es sich in Bezug auf Wetter- beziehungsweise Temperaturwerte dar, da die Außentemperatur beziehungsweise Windparameter o. ä. Rückschlüsse darauf zulassen, ob eine teilweise oder vollständige Bremsung des Triebstrangs zur Sicherung der Windturbine in Sturmverhältnissen notwendig ist. Die Innentemperatur spielt insofern eine Rolle, da hieraus auf Betriebsstörungen durch erhöhte Reibungen an Bauteilen oder ähnliche Fehlfunktionen geschlossen werden kann. Die Kontrolleinheit ist also ein sensorbasierter Controller und kann eine Vielzahl möglicher Eingangsparameter verarbeiten, die insbesondere in Abhängigkeit vom jeweiligen Aufbauort, der Größe und der Bauart der Windturbine Relevanz haben können.

Eine besonders vorteilhafte Weiterbildung einer solchen Windturbine besteht darin, dass die Kontrolleinheit im Betrieb bei Überschreitung eines Schwellenwerts, der sich auf mindestens einen von einem der Sensoren bezogenen Parameterwert bezieht, eine Bremsung mittels der Keilbremse, bevorzugt eine Komplettbremsung des Triebstrangs, initiiert. Die Kontrolleinheit leitet also eine Notbremsung der Rotationsbewegung des Triebstrangs ein. Entsprechend ist der jeweilige Schwellenwert so gewählt, dass bei einer Überschreitung des Werts davon ausgegangen werden kann, dass eine Gefahr für den Betrieb der Windturbine beziehungsweise einzelne ihrer Komponenten mit hoher Wahrscheinlichkeit vorhanden ist. Entsprechende Schwellenwerte können sich sowohl auf die Innentemperatur als auch auf die weiteren oben genannten Messwerte beziehen oder in Abhängigkeit vom Bautyp der Windturbine auch anderweitige Schwellenwerte auf Basis anderer Parameter umfassen.

Vorzugsweise umfasst die Keilbremse folgende Komponenten:
- eine mit einer zu bremsenden Triebstrangkomponente verbundene Bremsscheibe,
- eine an mindestens einer Flachseite der Bremsscheibe angeordnete, fest installierte Haltekonstruktion mit einer Führungsfläche,
- einen auf der Führungsfläche gelagerten Bremskeil, mit einer der Führungsfläche zugewandten Oberfläche, die in ihrer Form mit der der Führungsfläche korrespondiert,
- einen Aktuator, der im Betrieb den Bremskeil entlang der Führungsfläche verschiebt.

Der Bremskeil kann mit der Führungsfläche sowohl direkt als auch indirekt in Berührung stehen. Er kann beispielsweise über Rollen mit der Führungsfläche verbunden werden oder mithilfe eines geeigneten Gleitmittels daran entlang gleiten.

Der Bremskeil umfasst vorzugsweise einen an der der Führungsfläche in Richtung der Bremsscheibe gegenüberliegenden Seite des Bremskeils angebrachten Bremsbelag, der im Bremsbetrieb auf die Bremsscheibe gedrückt wird.

Eine derartige Anordnung der Komponenten einer Keilbremse ist einfach zu assemblieren (ggf. auch in bestehenden Bremsvorrichtungen nachzurüsten) und unkompliziert in der Handhabung; insbesondere die Führung des Bremskeils entlang der Führungsfläche führt dazu, dass durch die Form von Bremskeil und Führungsfläche die Bremswirkung der Keilbremse vorab eingestellt werden kann. Beispielsweise kann die Formgebung der Führungsfläche und oder des Bremskeils so gestaltet sein, dass sich bei Bewegung des Bremskeils nicht eine lineare Krafterhöhung ergibt, sondern eine potenzierte oder im Gegenteil eine nur langsamer ansteigende Krafterhöhung.

Eine Keilbremse mit den eben beschriebenen Komponenten wird vorteilhafterweise durch einen Elektromotor als Aktuator bedient, der bevorzugt von einer elektronischen Kontrolleinheit geregelt wird. Dadurch ist es möglich, dass ein möglichst weitgehend elektronisches beziehungsweise elektrisches System verwendet wird, bei dem nur die zuvor beschriebenen Komponenten der Bremsvorrichtung mechanisch ausgeführt sind und die Regelung vollkommen unter elektronischer Kontrolle erfolgt.

Was die Formgebung der Führungsfläche angeht, so ist gemäß seiner ersten prinzipiellen Alternative vorgesehen, dass sie eben ist und schräg zu einer Rotationsachse der zu bremsenden Triebstrangkomponente ausgerichtet ist. Dabei ist die Führungsfläche bevorzugt steil auf zu bremsende Bremsscheibe zulaufend. Eine Abart dieser ersten Alternative besteht darin, dass die Führungsfläche nicht eben ist, sondern in der Art einer Kulisse eine monoton, bevorzugt streng monoton steigende oder fallende Kurse im Querschnitt beschreibt. Dies führt zu dem bereits oben erwähnten Effekt eine nicht-linearen Verstärkung der Bremskraft bei Veränderung der Position des Bremskeils. Bevorzugt weist der Bremskeil eine an diese Form der Führungsfläche angepasste Form auf.

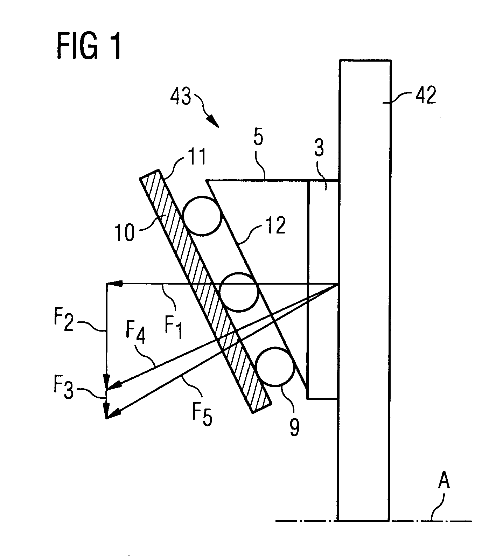

Eine zweite prinzipielle Alternative besteht in einer zickzackförmigen, beispielsweise W-förmigen Führungsfläche und/oder Oberfläche des Bremskeils. Bevorzugt ist sowohl die Führungsfläche als auch die Oberfläche des Bremskeils analog zickzackförmig ausgebildet. Eine solche Zickzackform ist beispielsweise in dem Artikel Roberts, Richard et al.: "Testing the Mechatronic Wedge Brake" SAE paper 2004-01-2766 in Figur 1 dargestellt und im Begleittext beschrieben. Die Lehre dieser Beschreibung wird entsprechend als Lehre in diese Patentanmeldung inkorporiert.

Bei der Zickzackform muss es sich allerdings nicht notwendigerweise um eine eckige Zickzackform, sondern es kann sich auch um eine gerundete Form handeln. Mit anderen Worten weist der Führungsfläche und/oder die Oberfläche des Bremskeils Erhöhungen und Vertiefungen auf, so dass der Bremskeil von einem Ausgangs-Nullpunkt gegen die Führungsfläche in zwei unterschiedliche Richtungen bewegt werden kann, um eine Bremskrafterhöhung zu erzielen. Bei dieser Alternative ist ein engerer Kontakt zwischen der Führungsfläche und dem Bremskeil möglich; dadurch kann ein kompakteres System realisiert werden, da es in sich deswegen stabiler ist, weil der Bremskeil nicht etwa in einer Richtung vollständig von der Führungsfläche entschlüpfen kann.

Außerdem hat es sich als vorteilhaft erwiesen, dass die erfindungsgemäße Windturbine eine manuell und/oder motorisch betreibbare Verstellvorrichtung aufweist, deren Bedienung ein Verdrehen der zu bremsenden Triebstrangkomponente in Richtung einer vorgesehenen Arretierungsposition ermöglicht. Mit einer solchen Verstellvorrichtung kann die jeweilige Triebstrangkomponente aus dem Stillstand (beispielsweise nach einer Vollbremsung) weiter bewegt werden, um in eine gesicherte Arretierungsposition verbracht zu werden. Die Arretierung muss dann nicht zwangsläufig mithilfe der Keilbremse erfolgen. Vielmehr können auch andere Bremsvorrichtungen die Triebstrangkomponente direkt oder indirekt fixieren, damit beispielsweise auch die Keilbremse selbst gewartet werden kann.

Es ist daher ganz allgemein bevorzugt, dass die Windturbine eine Arretierungsvorrichtung zum Feststellen der zu bremsenden Triebstrangkomponente in einer Arretierungsposition aufweist, wobei die Arretierungsvorrichtung bevorzugt an einer Bremsscheibe und/oder an Teilen der eben erwähnten Verstellvorrichtung angreift.

Bei dieser Bremsscheibe für die Arretierung kann es sich beispielsweise um eine Bremsscheibe der Keilbremse handeln. Es kann jedoch auch um eine Bremsscheibe einer weiteren Bremsvorrichtung dazu dienen. Mithilfe der Arretierungsvorrichtung ist es möglich, ohne Betätigung von Bremsvorrichtungen einen Stillstand der Rotationsbewegung der Triebstrangkomponente zu garantieren, so dass eben auch die Bremsvorrichtung selbst gewartet werden kann.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:
Figur 1 eine stark vereinfachte Prinzipdarstellung einer Keilbremse im Querschnitt,
Figur 2 eine Seitenansicht einer Ausführungsform einer erfindungsgemäßen Windturbine in einem geöffneten Zustand ihrer Kabine,
Figur 3 eine Detailansicht aus Figur 2 auf Teile des Triebstrangs und auf die Bremsvorrichtung der Windturbine.

Figur 1 zeigt eine Keilbremse 43 in einer Prinzipdarstellung als seitliche Ansicht. Sie weist einen Bremskeil 5 auf, der über Gleitrollen 9 entlang einer Führungsebene 11 einer Haltekonstruktion 10 beweglich ist. Eine Oberfläche oder Lagerfläche 12 des Bremskeils 5 weist in Richtung der Führungsebene 11, an der entlang die Gleitrollen 9 gelagert sind. Auf der der Lagerfläche 12 entgegengesetzten Seite des Bremskeils 5 befindet sich ein Bremsbelag 3, der in Richtung einer Bremsscheibe 42 weist. Die Bremsscheibe 42 rotiert um eine Achse A, zu der die Führungsebene 11 schräg, das heißt in einem Winkel ungleich 180° und ungleich 90° ausgerichtet ist. Dies bedeutet, dass die Bremsscheibe 42 in Blickrichtung des Betrachters rotiert.

Wenn der Bremskeil 5 mit dem Bremsbelag 3 an der Bremsscheibe 42 anliegt, so besteht eine Normalkraft F₁ an der Bremsscheibe 42 und in tangentialer Richtung zur Normalkraft F₁ eine Reibungskraft F₂. Aus der Kombination dieser beiden Kräfte F₁, F₂ resultiert in einem Dreieck eine kombinierte Bremskraft F₄. In diesem Kräftegleichgewicht spielt sich die Bremsung der Bremsscheibe 42 ab. Wird nun der Bremskeil 5 weiter in Richtung der Achse A durch eine Aktuatorkraft F₃ gedrückt, so resultiert daraus eine stärkere Bremskraft F₅. Durch Verschieben des Bremskeils 5 in Richtung der Rotationsachse A ist so eine Erhöhung der Bremskraft der Keilbremse 43 zu erzielen. Dabei erhöht sich die Bremskraft der Keilbremse 43 zwar nicht genauso stark wie die Aktuatorkraft F3, doch muss nach dem Verschieben des Bremskeils keine weitere zusätzliche Kraft mehr aufgebracht werden, um den Bremskeil 5 in Position zu halten. Stattdessen entsteht ein neues Kräftegleichgewicht mit einer konstanten Bremskraft F₅. Die notwendige Aktuatorkraft F₃ ist im Endeffekt abhängig von den Reibeeigenschaften des Kontakts zwischen der Bremsscheibe 42 und dem Bremsbelag 3. Die Keilbremse 43 hat ihrem optimalen Bremspunkt erreicht, wenn keine zusätzliche Aktuatorkraft F₃ mehr aufgewandt werden muss, um den Bremskeil 5 weiter in Richtung der Achse A zu verschieben, um dadurch die jeweils gewünschte Bremskraft zu erzielen. Eine Kontrolleinheit, die die Aktuatorkraft F₃ reguliert, zielt im Endeffekt auf das Erreichen genau dieses Punktes ab, indem ein Gleichgewicht der Kräfte erreicht ist.

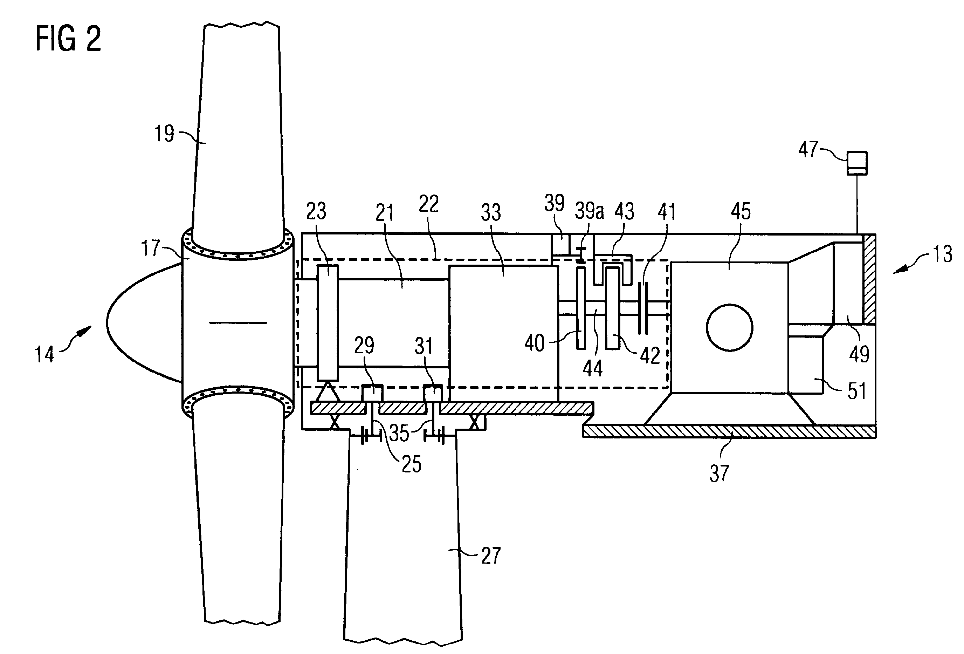

Figur 2 zeigt eine Windturbine 13 gemäß einer Ausführungsform der Erfindung. An ihrer vorderen, dem Wind zugewandten Seite weist sie einen Rotor 14 auf, der mehrere Rotorblätter 19 aufweist. Diese sind mit einer Nabe 17 verbunden. Von der Nabe 17 führt eine erste Welle 21 in das Innere der Kanzel 37 der Windturbine 13. Die erste Welle ist über eine Hauptlagerung 23 und ein erstes Joch 25 sowie ein zweites Joch 35 (deren Position mittels Motoren 29, 31 verstellbar sind) in der Kanzel 37 gelagert.

Ein Getriebe 33 wandelt die Rotation der ersten Welle 21 in eine Rotation einer zweiten Welle 44 um, wobei die zweite Welle 44 an der von der zweiten Welle 21 abgewandten Seite des Getriebes 33 angeordnet ist. Die zweite Welle 44 führt in einen Generator 45, in dem Strom aus der Rotationsenergie der zweiten Welle 44 gewonnen wird. Eine Kopplung 41 dient dazu, die zweite Welle 44 ein- oder auszukoppeln, um in Gefahrensituationen den Generator 45 von der Rotation der zweiten Welle 44 entkoppeln zu können. Die erste Welle 21 und die zweite Welle 44 sind gemeinsam Teil eines Triebstrangs 22. Der Generator 45 wird mit einem Wasserkühler 49 und mit einem zusätzlichen Ventilator 51 gekühlt. Statt des Wasserkühlers 49 kann auch ein Ölkühler verwendet werden. An der Außenseite der Kanzel 37 ist ein meteorologischer Sensor 47 angebracht, der meteorologische Daten, beispielsweise zur Windlage, zu Temperaturen, zu Wolken- und Sichtverhältnissen uvm. zur Verfügung stellt.

Im Bereich der zweiten Welle 44 befindet sich ein Verstellmotor 39, der an einem Zahnrad 40 verzahnt ist, welches mit der zweiten Welle 44 verbunden ist. Außerdem ist eine Bremsscheibe 42 mit der zweiten Welle 44 verbunden, die durch eine erfindungsgemäße Bremsvorrichtung 43 gebremst wird.

Die Kanzel 37 ist drehbar auf einem Turm 27 gelagert.

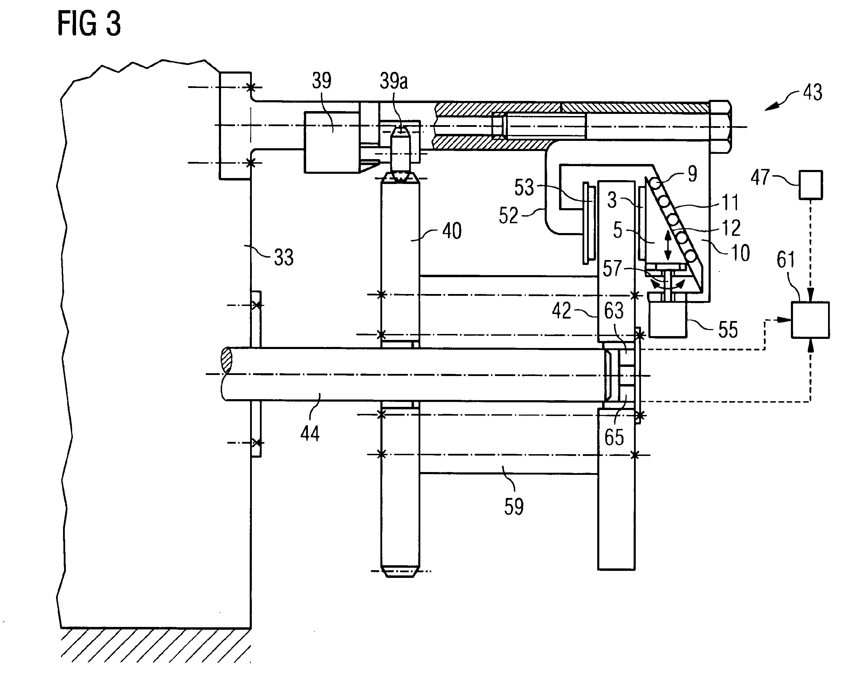

Figur 3 zeigt in größerem Detail den Bereich der zweiten Welle 44, insbesondere der Bremsvorrichtung 43. Von dem Getriebe 33 führt die zweite Welle 44 in Richtung des Generators 45 (hier nicht gezeigt). Das Zahnrad 40 ist verbunden mit dem Verstellmotor 39, der über ein Zahnrad 39a in das Zahnrad 40 eingreift. Mithilfe des Verstellmotors 39 kann die Drehposition der zweiten Welle 44 so verstellt werden, dass eine Arretierungsvorrichtung 59 in einer bestimmten Arretierungsposition in das Zahnrad 40 eingreifen und es so fixieren kann. Damit ist zugleich die zweite Welle 44, und indirekt über das Getriebe 33 auch die erste Welle 21 fixiert und kann nicht rotieren. Weiter in Richtung des Generators 45 ist als nächstes eine Bremsscheibe 42 angeordnet sowie zwei Sensoren 63, 65, die einerseits die Drehgeschwindigkeit bzw. das Drehmoment der zweiten Welle 44 und andererseits ihre Vibrationen messen.

Erfindungsgemäß, und wie hier im Detail deutlich wird, ist die Bremsvorrichtung 43 zur Abbremsung der Rotationsbewegung der Bremsscheibe 42 als Keilbremse realisiert. Dies bedeutet, dass ein Bremskeil 5 nach dem in Figur 1 gezeigten Prinzip entlang von Gleitrollen 9 über eine Führungsfläche 51 nach oben beziehungsweise unten bewegt wird, um die gewünschte Bremskraft F₃, F₅ an der Brennscheibe 42 zu erzielen. Neben dem bereits in Figur 1 gezeigten Bremsbelag 3 ist über einen Bremssattel 52 auf der dem Bremsbelag 3 gegenüberliegenden Seite ein zweiter Bremsbelag 53 angeordnet, so dass das Verschieben des Bremskeils 5 der Keilbremse 43 eine Art Einklemmung der Bremsscheibe 42 zwischen dem (ersten) Bremsbelag 3 und dem zweiten Bremsbelag 53 bewirkt. Ein elektrischer Stellmotor 55 verstellt über ein Verstellrad 57 die Position des Bremskeils 5 der Keilbremse 43 so, dass die gewünschte Bremskraft F₃, F₅ erreicht wird. Der Verstellmotor 55 wird von einer Kontrolleinheit 61 gesteuert, die sich hierzu aus Eingangsdaten aus Sensoren, insbesondere dem Drehsensor 63, dem Vibrationssensor 65 und dem meteorologischen Sensor 47, bedient und hieraus Steuerbefehle ableitet, beispielsweise zur aktiven Dämpfung von Vibrationen der zweiten Welle 44.

Die Daten aus diesen Sensoren können außerdem Aufschluss darüber geben, ob Gefahrensituationen bestehen, aufgrund derer die Drehgeschwindigkeit der zweiten Welle 44 beziehungsweise des gesamten Triebstrangs 22 reduziert beziehungsweise komplett auf Null gebracht werden sollte. Im Endeffekt kann also die Kontrolleinheit 61 in Abhängigkeit von diesen und weiteren Eingangsdaten (beispielsweise auch Messdaten zur aktuellen Bremswirkung der Keilbremse 43) genau die optimale momentane Bremskraft der Keilbremse 43 einstellen.

Es wird abschließend noch einmal darauf hingewiesen, dass es sich bei den vorhergehend detailliert beschriebenen Verfahren sowie bei der dargestellten Windturbine und ihren Komponenten lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Außerdem können "Einheiten" aus einer oder mehreren, auch räumlich verteilt angeordneten, Komponenten bestehen.

## Patentansprüche

1. Windturbine (13) mit einem Rotor (14) und mit mindestens einem Triebstrang (22), der mit einem Generator (45) zur Gewinnung von elektrischer Energie aus einer Rotation des Triebstrangs (22) verbunden ist, sowie mit einer Bremsvorrichtung (43) zum Abbremsen zumindest einer Triebstrangkomponente (21, 44) des Triebstrangs (22), **dadurch gekennzeichnet, dass** die Bremsvorrichtung (43) eine Keilbremse umfasst.

2. Windturbine gemäß Anspruch 1, **gekennzeichnet durch** eine elektronische Keilbremse mit einer elektronischen Bremskraftregelung.

3. Windturbine gemäß Anspruch 2, **gekennzeichnet durch** eine Kontrolleinheit (61) zur Bremskraftregelung, die im Betrieb Vibrationen mindestens einer Triebstrangskomponente (21,44) aktiv entgegenwirkt.

4. Windturbine gemäß einem der vorhergehenden Ansprüche, **dadurch gekennzeichnet, dass** der Triebstrang (22) eine erste Welle (21) und eine zweite Welle (44) als Triebstrangkomponenten umfasst, die über ein Übersetzungsgetriebe (33) miteinander verbunden sind.

5. Windturbine gemäß Anspruch 4, **dadurch gekennzeichnet, dass** die Keilbremse im Bereich der zweiten Welle (44) angeordnet ist.

6. Windturbine gemäß einem der vorhergehenden Ansprüche, **gekennzeichnet durch** eine Kontrolleinheit (61) zur elektronischen Bremskraftregelung, welche Kontrolleinheit (61) Signale aus mindestens einem Sensor (47, 63, 65) bezieht, der im Betrieb Parameterwerte der Rotation einer Triebstrangkomponente (21, 44) und/oder Parameterwerte misst, die sich auf Temperaturen im Bereich des Inneren der Windturbine und/oder auf Wetterverhältnisse um die Windturbine herum beziehen.

7. Windturbine gemäß Anspruch 6, **dadurch gekennzeichnet, dass** die Kontrolleinheit (61) im Betrieb bei Überschreitung eines Schwellenwerts, der sich auf mindestens einen von einem der Sensoren (47, 63, 65) bezogenen Parameterwert bezieht, eine Bremsung mittels der Keilbremse (43), bevorzugt eine Komplettbremsung des Triebstrangs (22), initiiert.

8. Windturbine gemäß einem der vorhergehenden Ansprüche, **dadurch gekennzeichnet, dass** die Keilbremse (43) folgende Komponenten umfasst:
- eine mit einer zu bremsenden Triebstrangkomponente (44) verbundene Bremsscheibe (42),
- eine an mindestens einer Flachseite der Bremsscheibe (42) angeordnete, fest installierte Haltekonstruktion (10) mit einer Führungsfläche (11),
- einen auf der Führungsfläche (11) gelagerten Bremskeil (5), mit einer der Führungsfläche (11) zugewandten Oberfläche (12), die in ihrer Form mit der der Führungsfläche (11) korrespondiert,
- einen Aktuator (55), der im Betrieb den Bremskeil (5) entlang der Führungsfläche (11) verschiebt.

9. Windturbine gemäß Anspruch 8, **gekennzeichnet durch** einen Elektromotor (55) als Aktuator, der bevorzugt von einer elektronischen Kontrolleinheit (61) geregelt wird.

10. Windturbine gemäß Anspruch 8 oder 9, **gekennzeichnet durch** eine ebene, schräg zu einer Rotationsachse der zu bremsenden Triebstrangkomponente (44) ausgerichtete Führungsfläche (11).

11. Windturbine gemäß Anspruch 8 oder 9, **gekennzeichnet durch** eine Zickzack-förmige Führungsfläche (11) und/oder Oberfläche (12) des Bremskeils (5).

12. Windturbine gemäß einem der vorhergehenden Ansprüche, **gekennzeichnet durch** eine manuell und/oder motorisch betreibbare Verstellvorrichtung (39), deren Bedienung ein Verdrehen der zu bremsenden Triebstrangkomponente (44) in Richtung einer vorgesehene Arretierungsposition ermöglicht.

13. Windturbine gemäß einem der vorhergehenden Ansprüche, **gekennzeichnet durch** eine Arretierungsvorrichtung (59) zum Feststellen der zu bremsenden Triebstrangkomponente (44) in einer Arretierungsposition, wobei die Arretierungsvorrichtung (59) bevorzugt an einer Bremsscheibe (40, 42) und/oder an Teilen einer gemäß Anspruch 12 ausgeführten Verstellvorrichtung (39) angreift.

14. Verfahren zum Abbremsen zumindest einer Triebstrangkomponente (21, 44) eines Triebstrangs (22) einer Windturbine mit einem Rotor (14) und mit mindestens dem Triebstrang (22), der mit einem Generator (45) zur Gewinnung von elektrischer Energie aus einer Rotation des Triebstrangs (22) verbunden ist, **dadurch gekennzeichnet, dass** das Abbremsen mittels einer eine Keilbremse umfassenden Bremsvorrichtung (43) durchgeführt wird.

15. Verwendung einer eine Keilbremse umfassenden Bremsvorrichtung (43) zum Abbremsen zumindest einer Triebstrangkomponente (21, 44) eines Triebstrangs (22) einer Windturbine mit einem Rotor (14) und mit mindestens dem Triebstrang (22), der mit einem Generator (45) zur Gewinnung von elektrischer Energie aus einer Rotation des Triebstrangs (22) verbunden ist.

## Claims

1. Wind turbine (13) comprising a rotor (14) and at least one drive train (22) which is connected to a generator (45) for obtaining electrical energy from rotation of the drive train (22), and having a braking device (43) for braking at least one drive train component (21, 44) of the drive train (22), **characterised in that** the braking device (43) comprises a wedge brake.

2. Wind turbine according to claim 1, **characterised by** an electronic wedge brake with electronic braking force control.

3. Wind turbine according to claim 2, **characterised by** a control unit (61) for braking force control which actively counteracts vibrations of at least one drive train component (21,44) during operation.

4. Wind turbine according to one of the preceding claims, **characterised in that** the drive train (22) comprises a first shaft (21) and a second shaft (44) as drive train components, interconnected via a step-up gearbox (33).

5. Wind turbine according to claim 4, **characterised in that** the wedge brake is disposed in the region of the second shaft (44).

6. Wind turbine according to one of the preceding claims, **characterised by** a control unit (61) for electronic braking force control, which control unit (61) obtains signals from at least one sensor (47, 63, 65) which, during operation, measures parameter values of the rotation of a drive train component (21, 44) and/or parameter values relating to temperatures in the region of the interior of the wind turbine and/or to weather conditions around the wind turbine.

7. Wind turbine according to claim 6, **characterised in that**, if a threshold value relating to at least one parameter value obtained by one of the sensors (47, 63, 65) is exceeded during operation, the control unit (61) initiates braking by means of the wedge brake (43), preferably complete braking of the drive train (22).

8. Wind turbine according to one of the preceding claims, **characterised in that** the wedge brake (43) comprises the following components:
- a brake disc (42) connected to a drive train component (44) to be braked,
- a permanently installed support structure (10) with a guide surface (11), said structure being installed on at least one flat side of the brake disc (42),
- a brake wedge (5) mounted on the guide surface (11) and having a surface (12) facing the guide surface (11) and having a shape corresponding to that of the guide surface (11),
- an actuator (55) which displaces the brake wedge (5) along the guide surface (11) during operation.

9. Wind turbine according to claim 8, **characterised by** an electric motor (55) as an actuator which is preferably controlled by an electronic control unit (61).

10. Wind turbine according to claim 8 or 9, **characterised by** a flat guide surface (11) oriented obliquely to a rotation axis of the drive train component (44) to be braked.

11. Wind turbine according to claim 8 or 9, **characterised by** a zigzag-shaped guide surface (11) and/or surface (12) of the brake wedge (5).

12. Wind turbine according to one of the preceding claims, **characterised by** a positioning device (39) which can be operated manually and/or in a motorised manner, operation of which enables the drive train component (44) to be braked to be turned in the direction of a locking position provided.

13. Wind turbine according to one of the preceding claims, **characterised by** a locking device (59) for securing the drive train component (44) to be braked in a locking position, said locking device (59) preferably acting on a brake disc (40, 42) and/or on parts of a positioning device (39) embodied according to claim 12.

14. Method for braking at least one drive train component (21, 44) of a drive train (22) of a wind turbine comprising a rotor (14) and at least the drive train (22) which is connected to a generator (45) for obtaining electrical energy from rotation of the drive train (22), **characterised in that** braking is performed by a braking device (43) comprising a wedge brake.

15. Use of a braking device (43) comprising a wedge brake for braking at least one drive train component (21, 44) of a drive train (22) of a wind turbine comprising a rotor (14) and at least the drive train (22) which is connected to a generator (45) for obtaining electrical energy from rotation of the drive train (22).

## Revendications

1. Éolienne (13) avec un rotor (14) et avec au moins une chaîne de transmission (22) qui est reliée à un générateur (45) pour produire de l'énergie électrique à partir d'une rotation de la chaîne de transmission (22), et avec un dispositif de freinage (43) pour freiner au moins un composant (21, 44) de la chaîne de transmission (22), **caractérisée en ce que** le dispositif de freinage (43) comprend un frein à coin.

2. Éolienne selon la revendication 1, **caractérisée par** un frein à coin électronique doté d'une régulation électronique de la force de freinage.

3. Éolienne selon la revendication 2, **caractérisée par** une unité de contrôle (61) pour la régulation de la force de freinage, qui au cours du fonctionnement s'oppose activement aux vibrations d'au moins un composant (21, 44) de chaîne de transmission.

4. Éolienne selon l'une des revendications précédentes, **caractérisée en ce que** la chaîne de transmission (22) comprend un premier arbre (21) et un second arbre (44) comme composants de chaîne de transmission, qui sont reliés entre eux par un multiplicateur (33).

5. Éolienne selon la revendication 4, **caractérisée en ce que** le frein à coin est disposé au niveau du second arbre (44).

6. Éolienne selon l'une des revendications précédentes, **caractérisée par** une unité de contrôle (61) pour la régulation électronique de la force de freinage, laquelle unité de contrôle (61) reçoit des signaux en provenance d'au moins un capteur (47, 63, 65), qui au cours du fonctionnement mesure des valeurs de paramètre de la rotation d'un composant (21, 44) de chaîne de transmission et/ou des valeurs de paramètre qui se rapportent aux températures à l'intérieur de l'éolienne et/ou aux conditions météorologiques autour de l'éolienne.

7. Éolienne selon la revendication 6, **caractérisée en ce que** l'unité de contrôle (61) au cours du fonctionnement initie en cas de dépassement d'une valeur seuil se rapportant à au moins une valeur de paramètre reçue par l'un des capteurs (47, 63, 65) un freinage au moyen du frein à coin (43), de préférence un freinage complet de la chaîne de transmission (22).

8. Éolienne selon l'une des revendications précédentes, **caractérisée en ce que** le frein à coin (43) comprend les composants suivants :
- un disque de frein (42) relié à un composant (44) de chaîne de transmission,
- une structure de support (10) fixe, agencée sur au moins un côté plat du disque de frein (42), avec une surface de guidage (11),
- un coin de freinage (5) monté sur la surface de guidage (11), avec une surface (12) tournée vers la surface de guidage (11) et dont la forme correspond à celle de la surface de guidage (11),
- un actionneur (55) qui au cours du fonctionnement déplace le coin de freinage (5) le long de la surface de guidage (11).

9. Éolienne selon la revendication 8, **caractérisée par** un moteur électrique (55) comme actionneur, réglé de préférence par une unité de contrôle (61) électronique.

10. Éolienne selon la revendication 8 ou 9, **caractérisée par** une surface de guidage (11) plane, orientée obliquement par rapport à un axe de rotation du composant (44) de chaîne de transmission devant être freiné.

11. Éolienne selon la revendication 8 ou 9, **caractérisée par** une surface de guidage (11) et/ou surface (12) du coin de freinage (5) en zigzag.

12. Éolienne selon l'une des revendications précédentes, **caractérisée par** un dispositif de réglage (39) pouvant être actionné manuellement et/ou par moteur et dont l'utilisation permet de tourner le composant (44) de chaîne de transmission devant être freiné en direction d'une position prévue de blocage.

13. Éolienne selon l'une des revendications précédentes, **caractérisée par** un dispositif de blocage (59) pour immobiliser le composant (44) de chaîne de transmission dans une position de blocage, le dispositif de blocage (59) s'appliquant de préférence sur un disque de frein (40, 42) et/ou sur des parties d'un dispositif de réglage (39) exécuté selon la revendication 12.

14. Procédé de freinage d'au moins un composant (21, 44) d'une chaîne de transmission (22) d'une éolienne avec un rotor (14) et avec au moins ladite chaîne de transmission (22) qui est reliée à un générateur (45) pour produire de l'énergie électrique à partir d'une rotation de la chaîne de transmission (22), **caractérisé en ce que** le freinage est effectué au moyen d'un dispositif de freinage (43) comprenant un frein à coin.

15. Utilisation d'un dispositif de freinage (43) comprenant un frein à coin pour freiner au moins un composant (21, 44) d'une chaîne de transmission (22) d'une éolienne avec un rotor (14) et avec au moins ladite chaîne de transmission (22) qui est reliée à un générateur (45) pour produire de l'énergie électrique à partir d'une rotation de la chaîne de transmission (22).
